# EUROPEAN PATENT SPECIFICATION

(11) **EP 2 365 256 B1**
(45) Date of publication and mention of the grant of the patent: **30.05.2018**
(21) Application number: 11157126.1
(22) Date of filing: 07.03.2011
(51) Int. Cl.: F24F 1/00, F24F 11/00, F24F 5/00, F24F 6/12

(54) **Air conditioning system**
Klimaanlage
Système de conditionnement d'air

(30) Priority: 09.03.2010 IT MI20100382
(43) Date of publication of application: 14.09.2011
(73) Proprietor: Mitsubishi Electric Hydronics & IT Cooling Systems S.p.A., 31100 Treviso (IT)
(72) Inventor: Gallina, Sergio, 00152 Roma (IT); Trecate, Roberto, 27100 Pavia (IT)
(74) Representative: Rapisardi, Mariacristina

(56) References cited:
- JP-A- 5 001 830
- US-A- 4 827 733
- US-A- 5 056 588
- US-A1- 2004 194 482
- US-B1- 6 935 132

## Description

The present invention relates to a conditioning system of an environment.

For particular environments as telephone exchanges, data centers and industrial premises characterized by a high use of electric energy, the problem of heat disposal arises.

Nowadays for the conditioning the equipments the control of the humidity of the environment is not particularly important, and also the control of the temperature is not particularly restrictive.

For these reasons it is possible to feed the premises to be cooled with air at variable temperature and humidity, with the only limitation that it have a temperature lower than that one would like to obtain in an environment, with particular attention to the containment of the electric consumptions.

In order to cool an environment well known equipments exist, which act following different principles.

The cooling by means of a cycle with a refrigeration compressor is mainly utilized with air conditioners.

Other widely used types are the adiabatic cooling, the direct free cooling with admission of external air to the environment to be cooled, the indirect free cooling by means of exchangers which utilize the external air when it is at favorable conditions, the cooling by Peltier effect, and many others.

Each system has advantages and disadvantages particularly bound to the seasonal and climatic conditions of the installation site.

The attention for containing the energy consumptions continuously stimulates the search for cooling systems with low consumptions of electric energy.

The most economical cooling system of an environment consists in the use of the free cooling, which as said consists in admitting air taken from the external environment when it has a temperature lower than that of the environment to be cooled.

If the external temperature is greater than that one would like to obtain in the environment, the free cooling could not be utilized, but it will be possible to utilize the adiabatic cooling, which employs the cooling caused by the evaporation of a certain quantity of water in order to cool down the external air admitted in the environment to be cooled.

The adiabatic cooling depends on the relative humidity of the air to be cooled, and has a maximum efficiency when the external air has a low humidity, and a minimum one when the external air has a high humidity.

When the temperature and humidity of the external air of the environment are too high, it is no more possible to utilized either the free cooling or the adiabatic cooling, so being necessary to utilize a cooling by means of a cycle with a refrigeration compressor.

Systems are today known, comprising in combination the adiabatic cooling system and the system of a cycle with a refrigeration compressor. The two systems are autonomous and are separately placed in the environment to be cooled.

US 6 935 132 describes a conditioning system of an environment comprising at least one adiabatic cooling system, at least one refrigeration cycle cooling system, and at least one free cooling system comprising at least one fan, the cooling systems being structurally integrated in single unit in which the adiabatic system is positioned upstream of the fan, but in which the systems remain autonomous.

Such systems formed by autonomous and separated units lament various drawbacks, among which the too high cost, the too long time needed for their installation, the too great occupation of free space inside the environment to cool, and the too high Energy consumption for their operation.

Technical task of the present invention is therefore to realize a conditioning system of an environment which permits to eliminate the technical drawbacks lamented from the known art.

Within this technical task one aim of the invention is to realize a conditioning system of an environment with very high efficiency, which is versatile and can be adapted to any condition of the external air to admit to the environment to condition, operating with a reduced energy consumption, and which is compact, structurally simple and easy to install in a short time.

The technical task , and also these and other aims according to the present invention are reached by realizing a conditioning system of an environment, according to claim 1.

Preferably the nebulization chamber has an external air intake and is configured so as to recover the dynamic pressure of the external air flowing in.

Preferably said nebulization chamber has water nebulizers in counter-flow with respect to the external air flowing in to distribute the air flow uniformly on at least one filtering wall delimiting said nebulization chamber.

Preferably said filtering wall comprises a mesh panel suitable for pre-filtering the flow of air flowing into said fan, for separating the water particles present in the flow of air flowing into said fan and not evaporated in said nebulization chamber, and for further evaporation of the water present in the flow of air flowing into said fan.

Preferably said at least one fan is of the centrifugal type.

Preferably said fan is present in a cooling chamber wherein it is located at least one direct expansion air cooling battery associated with the evaporator of said refrigeration cycle cooling system.

Preferably said at least one cooling battery is curved in shape.

Preferably said at least one cooling battery has a curve of 90°.

Preferably said at least one cooling chamber has at least one delimiting wall comprising a grille for uniform air diffusion by displacement.

Preferably said cooling battery is directly facing said diffuser grille.

Further characteristics and advantages of the invention will be more evident from the description of a preferred but non exclusive embodiment of the conditioning system of an environment according to the finding, illustrated in an indicative and non limitative way in the annexed drawings, in which:

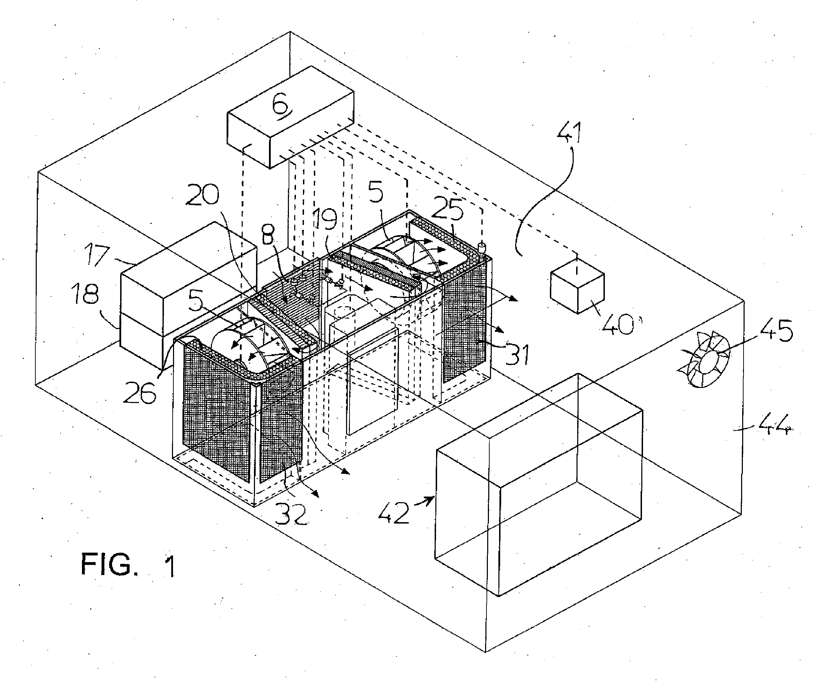

Figure 1 shows a schematic side perspective view of the system of the environment to be conditioned:

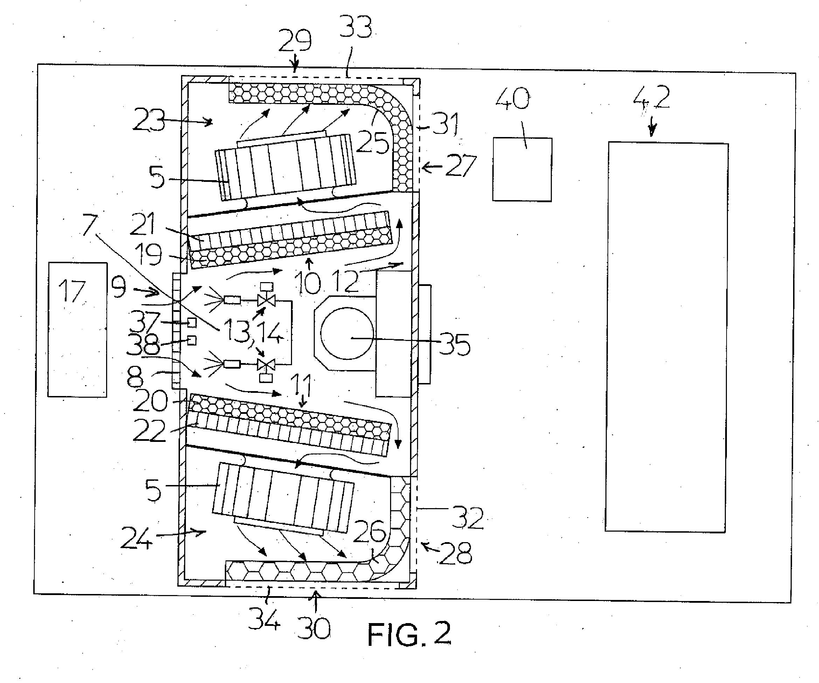

Figure 2 shows a top schematic view of the system.

With reference to the cited Figures, a conditioning system of an environment is shown, indicated as a whole with the reference character 1.

The system 1 comprises an adiabatic cooling system 2, a refrigeration cycle cooling system 3, and a free cooling system 4 comprising a plurality of fans 5.

The adiabatic cooling system 2, the refrigeration cycle cooling system 3, and the free cooling system 4 are structurally integrated in a single unit in which the adiabatic cooling system 2 is positioned upstream of the fans 5.

The single unit has a microprocessor logic 6 for the integrated control of the adiabatic cooling system 2, of the refrigeration cycle cooling system 3, and of the free cooling system 4.

The adiabatic cooling system 2 has a water nebulization chamber 7 located in the lower pressure area of the single unit.

The depression present in the nebulization chamber 7, with respect to the rest of the single unit, permits to confine the nebulized water inside the nebulization chamber 7 so avoiding that it can come out of it in an uncontrolled and undesired way diffusing itself in other areas of the single unit.

The nebulization chamber 7 has an external air intake 8 and is configured so as to recover the dynamic pressure of the external air flowing in.

Particularly, the shape of the nebulization chamber 7 is quadrangular, with a rear delimiting wall 9 in which the air intake 8 is formed, two lateral delimiting walls 10 and 11 inclined in an opposite direction in order to diverge from the rear delimiting wall 9, and a front delimiting wall 12.

The nebulization chamber 7 has a water nebulization system in counter-flow with respect to the external air flowing in to distribuite the air flow uniformly on the lateral delimiting walls 10 and 11.

The nebulization system comprises two stages 13, 14 or high pressure cooling capability levels, controller by a respective solenoid valve 15, 16.

The water nebulization with high pressure nozzles (for example from 70 to 90 Bar) permits to split the water in very small particles easily absorbable from the air.

At the outside of the nebulization chamber 7 a system 17 is present for the treatment and filtration of tap water, and a high pressure pump system 18 feeding the tap water suitably treated and filtered to the nebulization system.

The lateral delimiting walls 10, 11 of the nebulization chamber have a filtering and evaporating function, and suitably comprise a stainless metal mesh panel 19, 20 suitable for pre-filtering the flow of air flowing into the fans 5, for separating the water particles present in the flow of air flowing into said fans 5 and not evaporated in the nebulization chamber 7, and for further evaporation of the water present in the flow of air flowing into the fans 5, this last function being due to the great wet surface exposed to the passage of the air.

Inside the nebulization chamber 7 but downwards of the nebulization system the refrigeration compressor (not shown) of the refrigeration cycle cooling system is positioned, whereas the air condenser (not shown) of the refrigeration cycle cooling system is placed externally of the nebulization chamber 7.

The structure of the lateral delimiting walls 10, 11 of the nebulization chamber 7 is completed with a filtering panel 21, 22 of average efficiency for the filtration of the air introduced in the environment.

The single unit also has two cooling chambers 23, 24 placed on either side of the nebulization chamber 7.

In each cooling chamber 23, 24 two of the fans 5 are present.

The fans 5 are of the centrifugal reverse blades type without cochlea, each of them provided with a high efficiency dedicated motor.

In the cooling chambers 23, 24 a direct expansion air cooling battery 25, 26 is placed, which is curved in shape and is associated with the evaporator of the refrigeration cycle cooling system.

The batteries 25, 26 describe a curve of 90°.

The use of direct expansion cooling batteries 25, 26 curved in shape permits to maximize the Exchange surface in minor space.

The reduction of space of the system 1 is obtained, as well as thanks to the shape of the cooling batteries 25, 26, also thanks to the use of the high efficiency radial fans 5 without cochlea, which permit to feed air in a homogeneous way to the cooling batteries 25, 26 in very restricted spaces.

The cooling chambers 23, 24 have both front 27, 28 and respectively lateral delimiting walls 29, 30 comprising a grille 31, 32 and respectively 33, 34 for the uniform air diffusion by displacement.

The cooling batteries 25 and respectively 26 are directly facing the diffuser grilles 31, 33 and respectively 32, 34.

As a whole the system so permits a uniform air distribution at a low velocity, for example not greater than 1 m/s with a flow rate from 10.000 and 12.000 m³/h.

Air is distributed from the single unit at 180° (at the two sides and in front) uniformly for the entire height of the single unit (for example for a height between 0 and 2 meters). So the single unit can be installed even in areas decentralized or distant from the equipment to be conditioned, without requiring the installation of channels and air distribution systems.

With the control logic 6 of the system 1 a first temperature sensor 37 and an external air humidity sensor are connected, at the intake of the nebulization chamber 7, second air temperature sensors 39 at the exit of each of the cooling chambers 23, 24, and a third temperature sensor 40 of the environment 41 in which the equipment 42 is placed, for example one server, which has to be kept at a conditioned temperature.

The environment 41 has in one of its delimiting walls 44 a fan 45 for the extraction of the air admitted by the single unit in the environment 41 itself.

The control logic 6, in function of the data received from the sensors 37, 38, 39 and 40, actuates the only free cooling system for intake air to the nebulization chamber 7 having a temperature not greater than a first temperature threshold, the free cooling system and the adiabatic cooling system for intake air of the nebulization chamber 7 having a temperature greater than the first temperature threshold and humidity nont greater than a first humidity threshold, and the free cooling system with the refrigeration cycle cooling system in combination or not with the adiabatic cooling system for intake air of the nebulization chamber 7 having a temperature greater than the first temperature threshold and humidity greater than the first humidity threshold.

The intake air flow which passes through and comes out of the environment 41, is illustrated by directional arrows in the annexed figures.

The system being the subject of the present invention integrates in a single equipment all cooling systems described before, permitting a significant saving in the cost of the system, a reduction of installation times being the system a single unit, a minor use of the spaces in the environment to be cooled, a centralized regulation which optimizes the operation of the various cooling systems, so minimizing the consumptions.

Even the air distribution does not need further components, as the air is admitted directly into the environment at a low velocity by means of the grilles integrated in the system itself.

The dimensions of the system 1 are ultimately so small, that they facilitate the positioning in the environment to be cooled with various dimensions.

The conditioning system of an environment so conceived is susceptible of many modifications and variations, all within the inventive concept; furthermore, all details can be substituted with technically equivalent elements.

In practice the used materials, and also their dimensions, can be of any kind according to the needs and the state of the art.

## Claims

1. A conditioning system (1) of an environment, comprising at least one adiabatic cooling system (2), at least one refrigeration cycle cooling system (3), and at least one free cooling system (4) comprising at least one fan (5), said at least one adiabatic cooling system (2), said at least one refrigeration cycle cooling system (3), and said at least one free cooling system (4), being structurally integrated in a single unit in which said at least one adiabatic cooling system (2) is positioned upstream of said at least one fan (5), said at least one adiabatic cooling system (2) having at least one water nebulization chamber (7) located in the lower pressure area of said single unit, **characterized in that** said single unit has an integrated control logic (6) of said at least one adiabatic cooling system (2), said at least one refrigeration cycle cooling system (3), and said at least one free cooling system (4), and **in that** it has a first temperature sensor (37) and a humidity sensor (38) of the external air flowing into said nebulization chamber (7), a second temperature sensor (39) of the air flowing out of said cooling chamber (23, 24), and a third temperature sensor (40) of said environment, connected to said control logic (6) of said single unit, wherein, as a function of the data received from said sensors (37, 38, 39, 40), said control logic (6) activates only the free cooling system (4) for the air flowing into the nebulization chamber (7) having temperature not exceeding a first temperature threshold, the free cooling system (4) and the adiabatic cooling system (2) for the air flowing into the nebulization chamber (7) having temperature exceeding said first temperature threshold and humidity not exceeding a first humidity threshold, and the free cooling system (4) with the refrigeration cycle cooling system (3) optionally in combination with the adiabatic cooling system (2) for the air flowing into the nebulization chamber (7) having temperature exceeding said first temperature threshold and humidity exceeding said first humidity threshold.

2. The conditioning system (1) of an environment according to the preceding claim, **characterized in that** said nebulization chamber (7) has an external air intake (8) and is configured so as to recover the dynamic pressure of the external air flowing in.

3. The conditioning system (1) of an environment according to one or more of the preceding claims, **characterized in that** said nebulization chamber (7) has water nebulizers in counter-flow with respect to the external air flowing in to distribute the air flow uniformly on at least one filtering wall (10, 11) delimiting said nebulization chamber (7).

4. The conditioning system (1) of an environment according to the preceding claim, **characterized in that** said filtering wall (10, 11) comprises a mesh panel (19, 20) suitable for pre-filtering the flow of air flowing into said fan (5), for separating the water particles present in the flow of air flowing into said fan (5) and not evaporated in said nebulization chamber (7), and for further evaporation of the water present in the flow of air flowing into said fan (5).

5. The conditioning system (1) of an environment according to one or more of the preceding claims, **characterized in that** said at least one fan (5) is of the centrifugal type.

6. The conditioning system (1) of an environment according to one or more of the preceding claims, **characterized in that** said fan (5) is present in a cooling chamber (23, 24) wherein it is located at least one direct expansion air cooling battery (25, 26) associated with the evaporator of said refrigeration cycle cooling system.

7. The conditioning system (1) of an environment according to the preceding claim, **characterized in that** said at least one cooling battery (25, 26) is curved in shape.

8. The conditioning system (1) of an environment according to the preceding claim, **characterized in that** said cooling battery (25, 26) has a curve of 90°.

9. The conditioning system (1) of an environment according to the preceding claim, **characterized in that** said cooling chamber (23, 24) has at least one delimiting wall (27, 28, 29, 30) comprising a grille (31, 32, 33, 34) for uniform air diffusion by displacement.

10. The conditioning system (1) of an environment according to the preceding claim, **characterized in that** said cooling battery (25, 26) is directly facing said diffuser grille (31, 32, 33, 34).

## Patentansprüche

1. Klimaanlage (1) für eine Umgebung, umfassend mindestens ein adiabatisches Kühlungssystem (2), mindestens ein Kältezykluskühlungssystem (3) und mindestens ein Freikühlungssystem (4), umfassend mindestens einen Lüfter (5), wobei das mindestens eine adiabatische Kühlungssystem (2), das mindestens eine Kältezykluskühlungssystem (3) und das mindestens eine Freikühlungssystem (4) in struktureller Hinsicht in eine einzige Einheit integriert sind, in der das mindestens eine adiabatische Kühlungssystem (2) stromaufwärts des mindestens einen Lüfters (5) positioniert ist, wobei das mindestens eine adiabatische Kühlungssystem (2) mindestens eine Wasservernebelungskammer (7) aufweist, die im Unterdruckbereich der einzelnen Einheit angeordnet ist, **dadurch gekennzeichnet, dass** die einzelne Einheit eine integrierte Steuerungslogik (6) für das mindestens eine adiabatische Kühlungssystem (2), das mindestens eine Kältezykluskühlungssystem (3) und das mindestens eine Freikühlungssystem (4) aufweist, und dadurch, dass es einen ersten Temperatursensor (37) und einen Feuchtigkeitssensor (38) der Außenluft aufweist, die in die Vernebelungskammer (7) strömt, einen zweiten Temperatursensor (39) der Luft, die aus der Kühlkammer (23, 24) strömt, und einen dritten Temperatursensor (40) der Umgebung, verbunden mit der Steuerungslogik (6) der einzelnen Einheit, wobei die Steuerungslogik (6) abhängig von den von den Sensoren (37, 38, 39, 40) empfangenen Daten nur das Freikühlungssystem (4) für die Luft, die in die Vernebelungskammer (7) strömt, aktiviert, aufweisend eine Temperatur, die einen ersten Temperaturschwellenwert nicht überschreitet, das Freikühlungssystem (4) und das adiabatische Kühlungssystem (2) für die Luft, die in die Vernebelungskammer (7) strömt, aufweisend eine Temperatur, die den ersten Temperaturschwellenwert überschreitet, und eine Feuchtigkeit, die einen ersten Feuchtigkeitsschwellenwert nicht überschreitet, und das Freikühlungssystem (4) mit dem Kältezykluskühlungssystem (3) optional in Kombination mit dem adiabatischen Kühlungssystem (2) für die Luft, die in die Vernebelungskammer (7) strömt, aufweisend eine Temperatur, die den ersten Temperaturschwellenwert überschreitet, und eine Feuchtigkeit, die den ersten Feuchtigkeitsschwellenwert überschreitet.

2. Klimaanlage (1) für eine Umgebung nach dem vorhergehenden Anspruch, **dadurch gekennzeichnet, dass** die Vernebelungskammer (7) einen externen Lufteinlass (8) aufweist und ausgelegt ist, um den dynamischen Druck der einströmenden Außenluft wiederherzustellen.

3. Klimaanlage (1) für eine Umgebung nach einem oder mehreren der vorhergehenden Ansprüche, **dadurch gekennzeichnet, dass** die Vernebelungskammer (7) Wasservernebeler im Gegenström zur einströmenden Außenluft aufweist, um den Luftstrom gleichmäßig auf mindestens eine Filterwand (10, 11) zu verteilen, die die Vernebelungskammer (7) abgrenzt.

4. Klimaanlage (1) für eine Umgebung nach dem vorhergehenden Anspruch, **dadurch gekennzeichnet, dass** die Filterwand (10, 11) eine Gitterplatte (19, 20) umfasst, die geeignet ist, um den in den Lüfter (5) einströmenden Luftstrom vorzufiltern, um die im Strom der in den Lüfter (5) einströmenden Luft enthaltenen und nicht in der Vernebelungskammer (7) verdunsteten Wasserpartikel abzuscheiden sowie für die weitere Verdunstung des im in den Lüfter (5) einströmenden Luftstrom enthaltenen Wassers.

5. Klimaanlage (1) für eine Umgebung nach einem oder mehreren der vorhergehenden Ansprüche, **dadurch gekennzeichnet, dass** es sich bei mindestens einem Lüfter (5) um einen Zentrifugallüfter handelt.

6. Klimaanlage (1) für eine Umgebung nach einem oder mehreren der vorhergehenden Ansprüche, **dadurch gekennzeichnet, dass** mindestens ein Lüfter (5) in einer Kühlkammer (23, 24) enthalten ist, in der sich mindestens eine Direktverdampfungsluftkühlbatterie (25, 26) befindet, assoziiert mit dem Verdampfer des Kältezykluskühlungssystems.

7. Klimaanlage (1) für eine Umgebung nach dem vorhergehenden Anspruch, **dadurch gekennzeichnet, dass** die mindestens eine Kühlbatterie (25, 26) eine gekrümmte Form aufweist.

8. Klimaanlage (1) für eine Umgebung nach dem vorhergehenden Anspruch, **dadurch gekennzeichnet, dass** die Kühlbatterie (25, 26) eine Krümmung von 90° aufweist.

9. Klimaanlage (1) für eine Umgebung nach dem vorhergehenden Anspruch, **dadurch gekennzeichnet, dass** die Kühlkammer (23, 24) mindestens eine Abgrenzungswand (27, 28, 29, 30) aufweist, umfassend einen Luftdurchlass (31, 32, 33, 34) für die gleichmäßige Luftverteilung durch Verdrängung.

10. Klimaanlage (1) für eine Umgebung nach dem vorhergehenden Anspruch, **dadurch gekennzeichnet, dass** die Kühlbatterie (25, 26) direkt dem Verteilerluftdurchlass (31, 32, 33, 34) zugewandt ist.

## Revendications

1. Système de conditionnement (1) d'un environnement, comprenant au moins un système de refroidissement adiabatique (2), au moins un système de refroidissement à cycle frigorifique (3) et au moins un système free-cooling (4) comprenant au moins un ventilateur (5), ledit au moins un système de refroidissement adiabatique (2), ledit au moins un système de refroidissement à cycle frigorifique (3) et ledit au moins un système free-cooling (4) étant intégrés structurellement dans une unité monobloc dans laquelle ledit au moins un système de refroidissement adiabatique (2) est positionné en amont dudit au moins un ventilateur (5), ledit au moins un système de refroidissement adiabatique (2) ayant au moins une chambre de nébulisation d'eau (7) située dans la zone de pression inférieure de ladite unité monobloc, **caractérisé en ce que** ladite unité monobloc comporte une logique de commande intégrée (6) dudit au moins un système de refroidissement adiabatique (2), dudit au moins un système de refroidissement à cycle frigorifique (3) et dudit au moins un système free-cooling (4), et **en ce qu'**elle comporte un premier capteur de température (37) et un capteur d'humidité (38) de l'air externe passant à l'intérieur de ladite chambre de nébulisation (7), un second capteur de température (39) de l'air sortant de ladite chambre de refroidissement (23, 24) et un troisième capteur de température (40) dudit environnement, connectés à ladite logique de commande (6) de ladite unité monobloc, dans laquelle, en fonction des données envoyées par lesdits capteurs (37, 38, 39, 40), ladite logique de commande (6) active uniquement le système free-cooling (4) pour l'air passant à l'intérieur de la chambre de nébulisation (7) ayant une température ne dépassant pas un premier seuil de température, le système free-cooling (4) et le système de refroidissement adiabatique (2) pour l'air passant dans la chambre de nébulisation (7) ayant une température dépassant ledit premier seuil de température et une humidité ne dépassant pas un premier seuil d'humidité, et le système free-cooling (4) avec le système de refroidissement à cycle frigorifique (3) facultativement en combinaison avec le système de refroidissement adiabatique (2) pour l'air passant à l'intérieur de la chambre de nébulisation (7) ayant une température dépassant ledit premier seuil de température et une humidité dépassant ledit premier seuil d'humidité.

2. Système de conditionnement (1) d'un environnement selon la revendication précédente, **caractérisé en ce que** ladite chambre de nébulisation (7) présente une prise d'air externe (8) et est configurée pour récupérer la pression dynamique de l'air externe passant à l'intérieur.

3. Système de conditionnement (1) d'un environnement selon une ou plusieurs des revendications précédentes, **caractérisé en ce que** ladite chambre de nébulisation (7) présente des nébuliseurs d'eau à contre-courant par rapport à l'air externe passant à l'intérieur, de sorte à distribuer le flux d'air uniformément sur au moins une paroi filtrante (10, 11) définissant ladite chambre de nébulisation (7).

4. Système de conditionnement (1) d'un environnement selon la revendication précédente, **caractérisé en ce que** ladite paroi filtrante (10, 11) comprend un panneau à mailles (19, 20) pouvant préfiltrer le flux de l'air passant à l'intérieur dudit ventilateur (5), pour séparer les particules d'eau contenues dans le flux d'air passant à l'intérieur dudit ventilateur (5) et non évaporées dans ladite chambre de nébulisation (7), et pour évaporer ultérieurement l'eau contenue dans le flux d'air passant à l'intérieur dudit ventilateur (5).

5. Système de conditionnement (1) d'un environnement selon une ou plusieurs des revendications précédentes, **caractérisé en ce que** ledit au moins un ventilateur (5) est de type centrifuge.

6. Système de conditionnement (1) d'un environnement selon une ou plusieurs des revendications précédentes, **caractérisé en ce que** ledit au moins un ventilateur (5) se trouve dans une chambre de refroidissement (23, 24), dans laquelle est installée au moins une batterie de refroidissement à air à détente directe (25, 26) associée à l'évaporateur dudit système de refroidissement à cycle frigorifique.

7. Système de conditionnement (1) d'un environnement selon la revendication précédente, **caractérisé en ce que** ladite au moins une batterie de refroidissement (25, 26) présente une forme courbe.

8. Système de conditionnement (1) d'un environnement selon la revendication précédente, **caractérisé en ce que** ladite batterie de refroidissement (25, 26) présente une courbe de 90°.

9. Système de conditionnement (1) d'un environnement selon la revendication précédente, **caractérisé en ce que** ladite chambre de refroidissement (23, 24) présente au moins une paroi de délimitation (27, 28, 29, 30) comprenant une grille (31, 32, 33, 34) pour une diffusion uniforme de l'air par déplacement.

10. Système de conditionnement (1) d'un environnement selon la revendication précédente, **caractérisé en ce que** ladite batterie de refroidissement (25, 26) se situe directement en face de ladite grille de diffusion (31, 32, 33, 34).
